# EUROPEAN PATENT SPECIFICATION

(11) **EP 3 014 426 B1**
(45) Date of publication and mention of the grant of the patent: **24.04.2019**
(21) Application number: 14740060.0
(22) Date of filing: 23.06.2014
(51) Int. Cl.: G06F 3/0482, G06F 3/0488, G06F 9/451

(54) **SELF-REVEALING SYMBOLIC GESTURES**
SELBSTENTHÜLLENDE SYMBOLISCHE GESTEN
GESTES SYMBOLIQUES DÉCOUVRABLES

(30) Priority: 26.06.2013 US 201313928372
(43) Date of publication of application: 04.05.2016
(73) Proprietor: Microsoft Technology Licensing, LLC, Redmond, WA 98052 (US)
(72) Inventor: SCHULTZ, Kristoffer, Redmond, Washington 98052-6399 (US); HAMMONTREE, Monty L., Redmond, Washington 98052-6399 (US); BAPAT, Vikram, Redmond, Washington 98052-6399 (US); CHEN, Xiaoji, Redmond, Washington 98052-6399 (US); ATHANS, Emmanuel J., Redmond, Washington 98052-6399 (US); CRUZ, Wilfredo, Redmond, Washington 98052-6399 (US)
(74) Representative: Grünecker Patent- und Rechtsanwälte PartG mbB
(86) International application number: PCT/US2014/043557
(87) International publication number: WO 2014/209827

(56) References cited:
- WO-A1-2012/088634
- US-A1- 2009 100 383

## Description

### BACKGROUND

In today's computer software development industry, traditional marking menus typically can call functions based on only single vectors to access and execute system commands. As a result, access and execution of system commands can be cumbersome and slow. This slow access and execution of system commands can reduce software developer productivity.
US 2009/0100383 relates to a computing system that includes a display presenting a user interface, and a gesture input configured to translate a user gesture into a command for controlling the computing system. The computing system also includes a gesture predicting engine to predict a plurality of possible commands based on the beginning of the user gesture, and a rendering engine to indicate the plurality of possible commands via the user interface.
WO 2012/088634 relates to a user interface and a technique for gesture recognition which comprises predicting one or more possible commands to an apparatus based on one or more sub-gestures performed by a user previously, and indicating the one or more possible commands.

### SUMMARY

It is the object of the present invention to improve the efficiency of prior art systems. This object is solved by the subject matter of the independent claims. Preferred embodiments are defined by the dependent claims.

This summary is provided to introduce a selection of concepts in a simplified form that are further described below in the Detailed Description. This summary is not intended to identify key features or essential features of the claimed subject matter, nor is it intended to be used to limit the scope of the claimed subject matter.

The disclosure is directed to a method including receiving an initial user activation event (e.g., produced from a digit of a hand of a user, a keyboard chord, a keyboard hot key, a stylus, or an action of a pointing device). The method includes receiving a first portion of a direction-specific symbolic swipe gesture, such as a symbolic swipe gesture with a curve, and recording, in response to the initial user activation event, a first path of a first portion of the direction-specific symbolic swipe gesture. In response to a pause in the direction-specific symbolic swipe gesture, a selected number of possible symbolic gestures are displayed based on the recorded first path that reveal system commands that map to the symbolic gestures. A second path of a second portion of the direction-specific symbolic swipe gesture is recorded. Examples of the direction-specific symbolic swipe gesture are produced from a digit of a hand of a user, a stylus, or an action of a pointing device. In response to the recorded first and second paths of the direction-specific symbolic swipe gesture and a trigger (e.g., a digit of a hand or stylus being lifted from a touchscreen, or an action of a pointing device), a first system command is accessed that maps to the first direction-specific gesture. One embodiment of the method executes the accessed first system command.

### BRIEF DESCRIPTION OF THE DRAWINGS

The accompanying drawings are included to provide a further understanding of embodiments and are incorporated in and constitute a part of this specification. The drawings illustrate embodiments and together with the description serve to explain principles of embodiments. Other embodiments and many of the intended advantages of embodiments will be readily appreciated, as they become better understood by reference to the following detailed description. The elements of the drawings are not necessarily to scale relative to each other. Like reference numerals and other indicators (collectively alpha-numerics in this disclosure) designate corresponding similar features.
Figure 1 is a block diagram illustrating an example computing device that can implement self-revealing gesture methods.
Figure 2 is a diagram illustrating a touchscreen device and an example scenario for implementing self-revealing symbolic gestures for invoking global commands through bimodal input from a user.
Figures 3A-3E illustrate an example self-revealing symbolic gestures scenario for accessing and executing system commands.
Figure 4 is a flow diagram illustrating an example self-revealing symbolic gestures method.
Figure 5 is a flow diagram illustrating an example self-revealing symbolic gestures method.

### DETAILED DESCRIPTION

In the following Detailed Description, reference is made to the accompanying drawings, which form a part hereof, and in which is shown by way of illustration specific embodiments in which the invention may be practiced. It is to be understood that other embodiments may be utilized and structural or logical changes may be made without departing from the scope of the present invention. The following detailed description, therefore, is not to be taken in a limiting sense, and the scope of the present invention is defined by the appended claims. It is also to be understood that features of the various example embodiments described herein may be combined with each other, unless specifically noted otherwise.

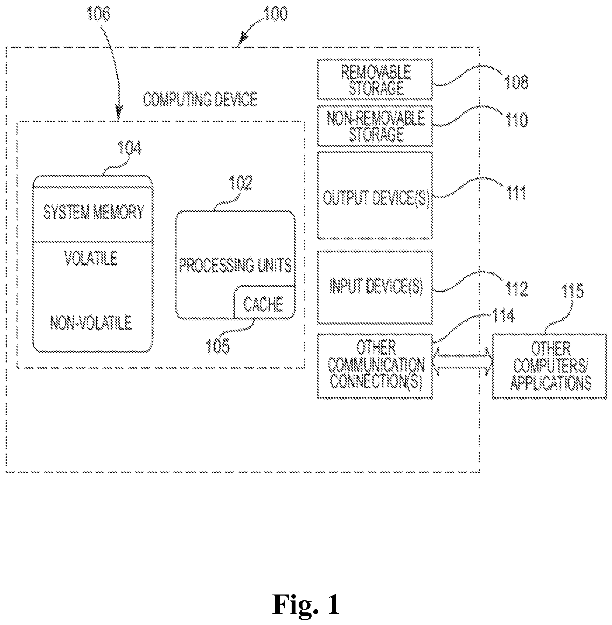

Figure 1 illustrates an exemplary computer system that can be employed as an operating environment includes a computing device, such as computing device 100. In a basic configuration, computing device 100 typically includes a processor architecture having one or more processing units, i.e., processors 102, and memory 104. Depending on the exact configuration and type of computing device, memory 104 may be volatile (such as random access memory (RAM)), non-volatile (such as read only memory (ROM), flash memory, etc.), or some combination of the two. Each of the processing units include a cache 105 interposed between the processor 102 and the memory 104. This basic configuration is illustrated in Figure 1 by line 106. The computing device can take one or more of several forms. Such forms include a personal computer (PC), a server, a touchscreen device (e.g., tablet PC, slate device, or touchscreen phone), other handheld devices, a consumer electronic device (e.g., a video game console), or other computer devices.

Computing device 100 can also have additional features/functionality. For example, computing device 100 may also include additional storage (removable and/or non-removable) including, but not limited to, magnetic or optical disks or solid state memory, or flash storage devices such as removable storage 108 and non-removable storage 110. Computer storage media includes volatile and nonvolatile, removable and non-removable media implemented in any suitable method or technology for storage of information such as computer readable instructions, data structures, program modules or other data. Memory 104, removable storage 108 and non-removable storage 110 are all examples of computer storage media. Computer storage media includes, but is not limited to, RAM, ROM, EEPROM, flash memory or other memory technology, CD-ROM, digital versatile discs (DVD) or other optical storage, magnetic cassettes, magnetic tape, magnetic disk storage or other magnetic storage devices, universal serial bus (USB) flash drive, flash memory card, or other flash storage devices, or any other storage device that can be used to store the desired information and that can be accessed by computing device 100. Any such computer storage media may be part of computing device 100.

Computing device 100 includes one or more communication connections 114 that allow computing device 100 to communicate with other computers/applications 115. Computing device 100 may also include input device(s) 112, such as keyboard, pointing device (e.g., mouse), stylus (e.g., pen), voice input device, touch input device, touchscreen, etc. Computing device 100 may also include output device(s) 111, such as a display, speakers, printer, etc.

The computing device 100 can be configured to run an operating system software program and one or more software applications, which make up a system platform. In embodiments, the operating system and/or software applications are configured to present a user interface (UI) that is configured to allow a user to interact with the software application in some manner using some type of input device. In one embodiment, this UI is a visual display that is capable of receiving user input and processing that user input in some way. Embodiments of such a UI can, for example, include one or more user intractable components (e.g., links, buttons or controls) that can be selected (e.g., clicked or touched) by a user via a pointing device or touchscreen or other suitable input device.

In one example, the computing device 100 includes a software component referred to as a managed environment. The managed environment can be included as part of the operating system or can be included later as a software download. The managed environment typically includes pre-coded solutions to common programming problems to aid software developers to create software programs such as applications to run in the managed environment, and it also typically includes a virtual machine that allows the software applications to run in the managed environment so that the programmers need not consider the capabilities of the specific processors 102. A managed environment can include cache coherency protocols and cache management algorithms.

The computing device 100 can be coupled to a computer network, which can be classified according to a wide variety of characteristics such as topology, connection method, and scale. A network is a collection of computing devices and possibly other devices interconnected by communications channels that facilitate communications and allows sharing of resources and information among interconnected devices. Examples of computer networks include a local area network, a wide area network, the Internet, or other network.

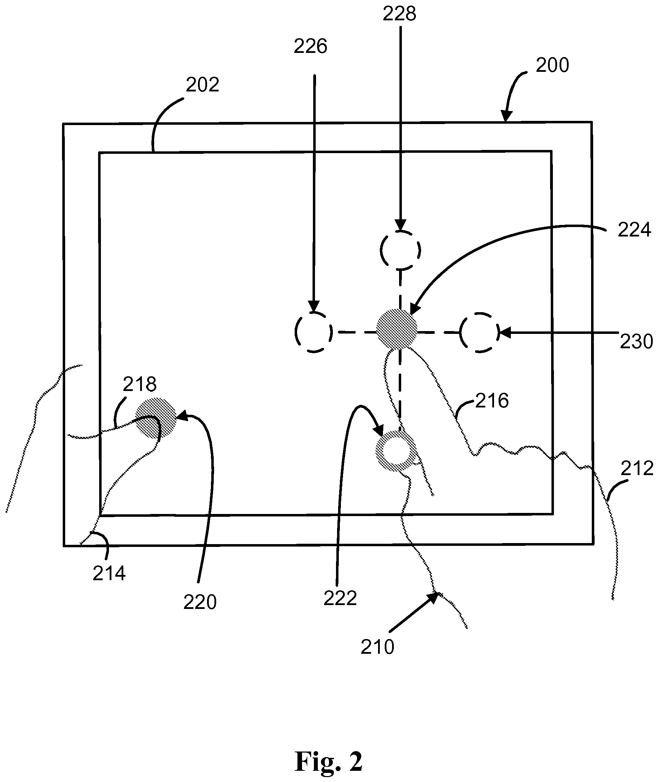

One embodiment of touchscreen device 200 (e.g., tablet PC, slate device, or touchscreen phone) is illustrated in schematic diagram form in Figure 2. Touchscreen device 200 can be implemented with a suitable computing device, such as computing device 100. Touchscreen device 200 includes a touchscreen 202.

Figure 2 illustrates an example scenario for implementing self-revealing symbolic gestures for invoking global system commands through bimodal input from a user 210. In the scenario illustrated in Figure 2, a combination of an initial user activation event and a direction-specific symbolic swipe gesture of a digit 216 (e.g., finger) of a first hand 212 of user 210 (e.g., dominant hand). In other examples, direction-specific symbolic swipe gestures are produced from a stylus and/or an action of a pointing device. Example initial user activation events include a touch with a digit 218 (e.g., a thumb) of a second hand 214 of user 210 (e.g., non-dominant hand) or a stylus to touchscreen 202 or an input from an input device other than touchscreen 202, such as a keyboard chord, a keyboard hot key, and/or an action of a pointing device. A keyboard chord is entered via user 210 entering characters or commands formed by pressing one, two, or several keys together, like playing a chord on a piano. The combination of the initial user activation event and the direction-specific symbolic swipe gesture of the first hand 212 of user 210 allows system commands to be easily accessed and executed. When user 210 repeatedly enters direction-specific symbolic swipe gestures, user 210 can develop muscle memory for specific system commands, which increase productivity speed.

One example of this implementation could be touchscreen device 200 where a keyboard or pointing device is not readily available. (e.g., slate device or touchscreen phone). In this example implementation, the initial user activation event of is made with a touch with a digit 218 of a second hand 214 (most likely a non-dominant hand) or a stylus to touchscreen 202 to initiate the listening action. Then, the direction-specific symbolic swipe gesture of digit 216 of first hand 212 (most likely a dominant hand) determines the menu or function called. In one embodiment, releasing digit 216 of first hand 212 selects the function. In one embodiment, releasing digit 218 of second hand 214 at any time after the initial user activation event cancels the action and returns user 210 to a normal work environment.

In the example scenario for implementing self-revealing symbolic gestures for invoking, displaying, and executing system commands illustrated in Figure 2, position 220 is at an initial touchdown action of digit 218 of second hand 214 to touchscreen 202 to produce the initial user activation event to thereby invoke a self-revealing gesture mode. This touchdown position 220 of digit 218 of second hand 214 is held throughout the entire self-revealing symbolic gesture event while first hand 212 completes its actions to access and execute system commands. Releasing touchdown position 220 of digit 218 of second hand 214 from touchscreen 202 cancels the self-revealing symbolic gesture event.

Position 222 is an initial touch point of digit 216 of first hand 212 to touchscreen 202. Digit 216 of hand 212 is then dragged on touchscreen 202 in a specific direction, in this scenario up to position 224.

When digit 216 of hand 212 is held at position 224 in this scenario, indicators for positions 226, 228, and 230 are revealed (i.e., displayed) as options for further navigation each for possible symbolic gestures that are mapped to system commands. Dragging digit 216 of hand 212 on touchscreen 202 to any of positions 226, 228, and 230 completes a direction-specific symbolic swipe gesture and then releasing digit 216 of first hand 212 triggers the displayed system command mapped to the completed direction-specific symbolic swipe gesture. The selected command is accessed and executed.

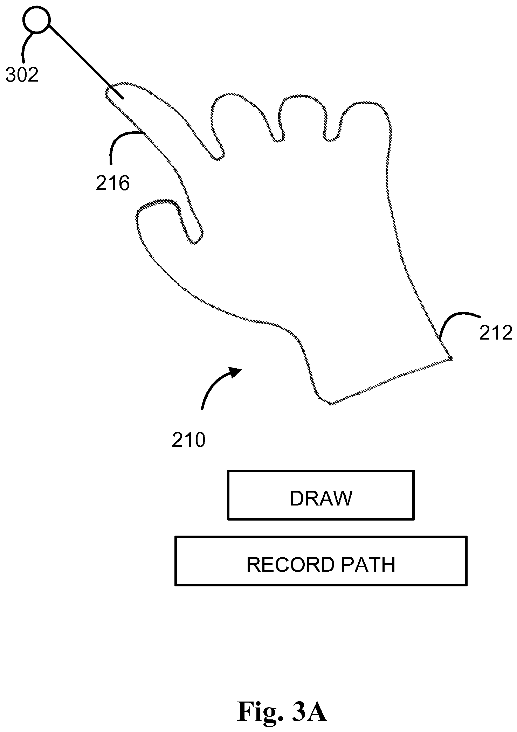

Figures 3A-3E illustrate an example self-revealing symbolic gestures scenario for accessing and executing system commands performed by a self-revealing gesture software application (e.g., an operating system or software application) that runs on a suitable computing device, such as computing device 100 (e.g., touchscreen device 200). The self-revealing gesture software application includes self-revealing gesture language instructions that facilitates user 210 with different possible system command menu and function options based on a recorded portion of a partially completed direction-specific symbolic swipe gesture. The self-revealing gesture software application can intercept touch events. One example self-revealing gesture software application that is not incorporated into the operating system is implemented in low level language (e.g., an operating system level language) for optimizing calculations and communication with the operating system.

In Figure 3A, at position 302, user 210 starts drawing a direction-specific symbolic swipe gesture with digit 216 of first hand 212. The self-revealing gesture software application then starts recording a path of a drawn first portion of the direction-specific symbolic swipe gesture. While recording the path, the self-revealing gesture software application starts calculating possible gestures that user 210 can complete with the recorded drawn path.

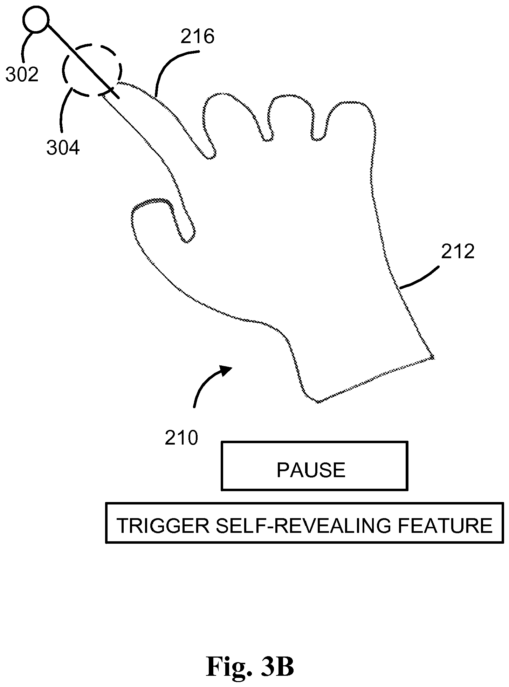

In Figure 3B, when user 210 pauses at 304 for a certain amount of time (e.g., a second), a self-revealing symbolic gesture event or feature is triggered.

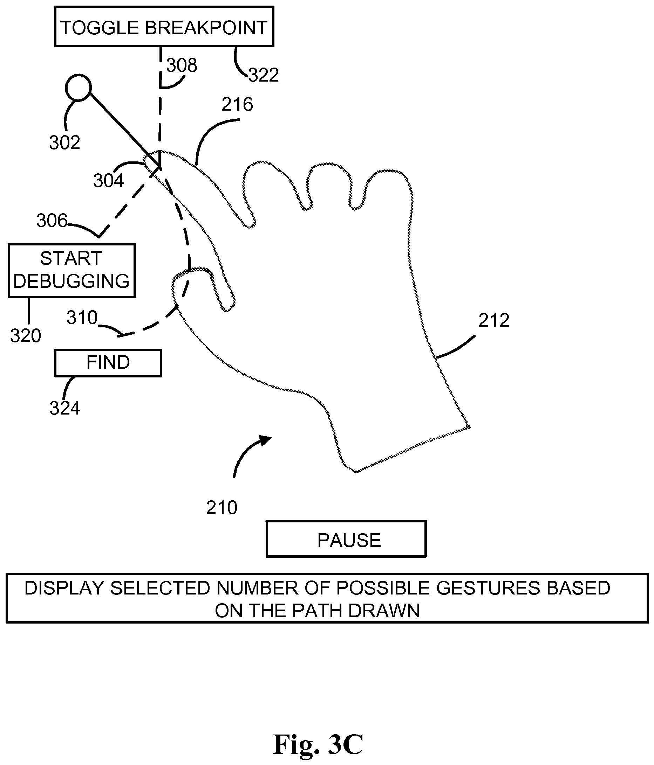

In Figure 3C, during the pause at 304, the self-revealing gesture software application, calculates a selected number (e.g., top three) possible symbolic gestures based on the recorded drawn path. The self-revealing gesture software application controls the touchscreen to display what is left of the selected number (e.g., top three) of possible symbolic gestures previously calculated, starting from where digit 216 paused, until where the symbolic gesture would finish. Possible symbolic gesture 306 is mapped to system command Start Debugging 320. Possible symbolic gesture 308 is mapped to system command Toggle Breakpoint 322. Possible symbolic gesture 310 is mapped to system command Find 324. In one embodiment, the selected number of possible symbolic gestures is calculated based on the recorded drawn path, gestures that align with the record drawn path, and/or gestures that are most used by user 210. In some scenarios, there is less than the selected number of possible symbolic gestures based on the recorded path drawn (e.g., based on recorded drawn path there are only two possible symbolic gestures when the selected number is three).

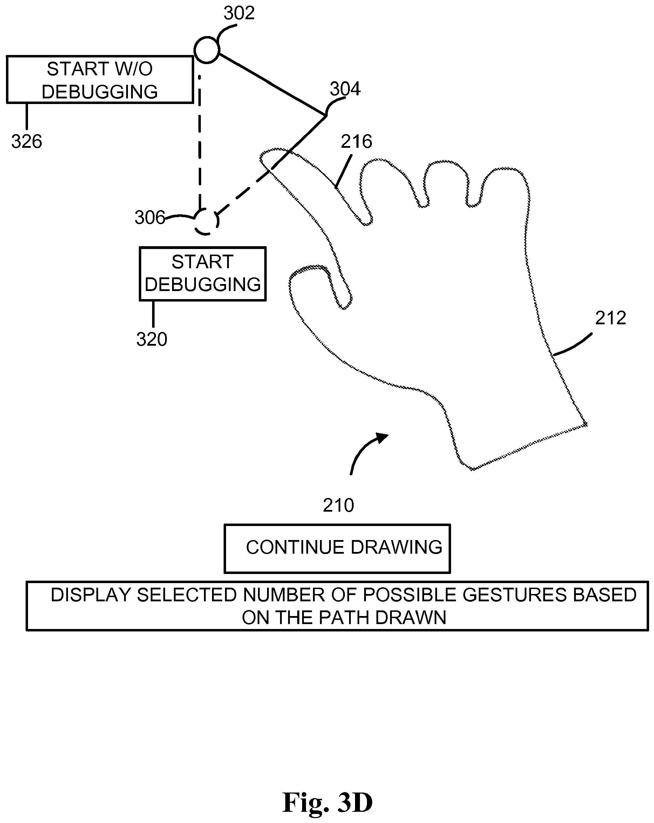

In Figure 3D, at position 304, user 210 starts drawing selected symbolic gesture 306 with digit 216 of first hand 212. If user 210 continues the path toward completion of one or more symbolic gestures, the self-revealing gesture software application continues to calculate possible symbolic gestures until user 210 pauses again. When user 210 pauses for a selected time, the self-revealing gesture software application, calculates a selected number (e.g., top three) possible symbolic gestures based on the recorded drawn path. The self-revealing gesture software application controls the touchscreen to display what is left of the selected number (e.g., top three) of possible symbolic gestures previously calculated, starting from where digit 216 paused, until where the symbolic gesture would finish. Possible symbolic gesture being completed at start point 302 is mapped to system command Start Without Debugging 326.

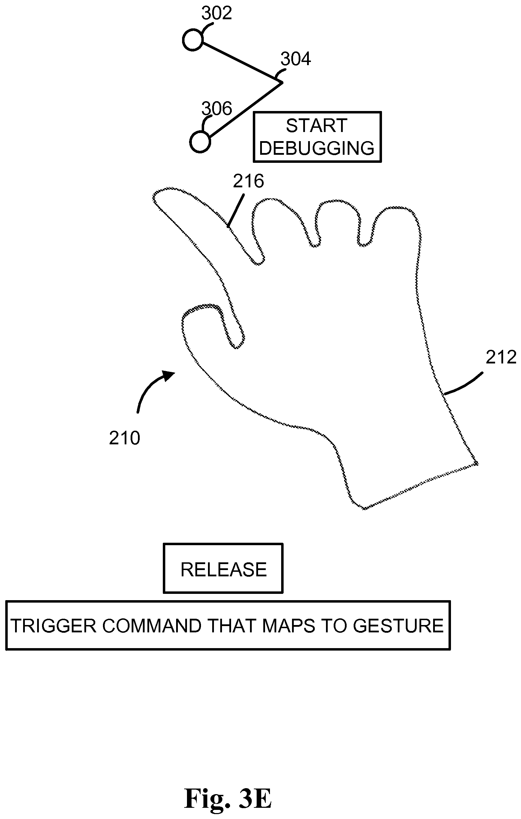

In Figure 3E, when user 210 lifts digit 216 of first hand 212 from the touchscreen, the self-revealing gesture software application triggers the event map to that direction-specific symbolic swipe gesture to access and execute the mapped system command. In the illustrated scenario, symbolic gesture 306 is completed and the lifting of digit 216 triggers the mapped system command Start Debugging 320 to be accessed and executed.

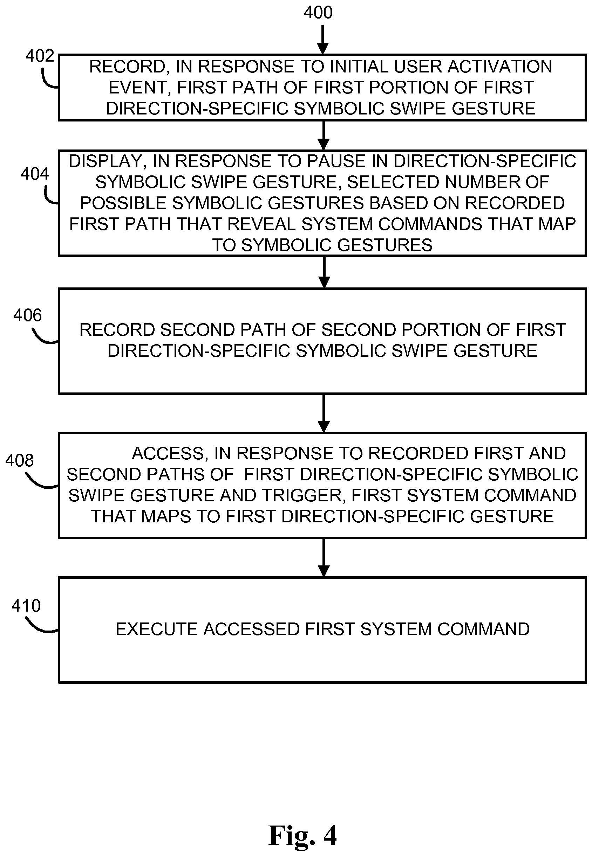

Figure 4 illustrates an example self-revealing symbolic gestures method 400 performed by an operating system or software application that runs on a suitable computing device, such as computing device 100 (e.g., touchscreen device 200). Computer implemented method 400 includes at 402, recording, in response to an initial user activation event, a first path of a first portion of a direction-specific symbolic swipe gesture. Example initial user activation events are produced from a digit of a hand of a user, a keyboard chord, a keyboard hot key, a stylus, and/or an action of a pointing device. In one embodiment, the direction-specific symbolic swipe gesture can include one or more curves to produce a graffiti-style gesture.

At 404, in response to a pause in the direction-specific symbolic swipe gesture, a selected number of possible symbolic gestures are displayed based on the recorded first path that reveal system commands that map to the symbolic gestures. In one embodiment, the selected number of possible symbolic gestures is calculated based on the recorded first path, gestures that align with the record first path, and/or gestures that are most used by the user.

At 406, a second path of a second portion of the direction-specific symbolic swipe gesture is recorded. Example first and second portions of the direction-specific symbolic swipe gesture are produced from a digit of a hand of a user, a stylus, and/or an action of a pointing device. In one example, the first and second portions of the direction-specific symbolic swipe gesture are produced from a digit of a first hand (e.g., dominant hand) of the user, and the initial user activation event is produced from a digit of a second hand (e.g., non-dominant hand) of the user.

At 408, in response to the recorded first and second paths of the direction-specific symbolic swipe gesture and a trigger, the first system command is accessed that maps to the first direction-specific gesture. Example triggers are produced in response to a digit being lifted from a touchscreen, a stylus being lifted from a touchscreen, and/or a second action of the pointing device. At 410, the accessed first system command is executed.

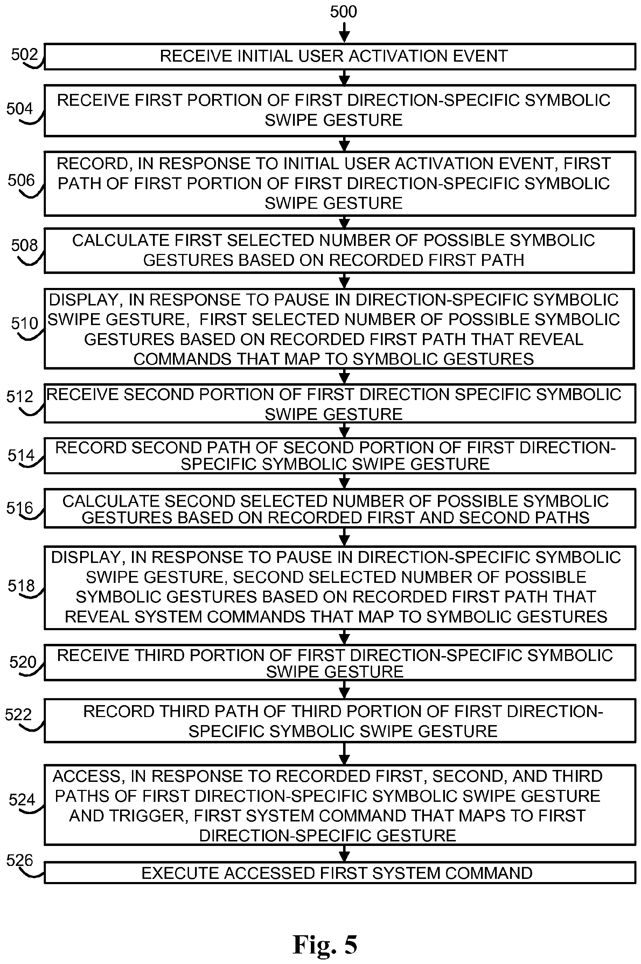

Figure 5 illustrates a detailed example self-revealing symbolic gestures method 500 performed by an operating system or software application that runs on a suitable computing device, such as computing device 100 (e.g., touchscreen device 200). Computer implemented method 500 includes at 502, receiving an initial user activation event. Example initial user activation events are produced from a digit of a hand of a user, a keyboard chord, a keyboard hot key, a stylus, and/or an action of a pointing device. At 504, a first portion of a direction-specific symbolic swipe gesture is received. In one embodiment, the direction-specific symbolic swipe gesture can include one or more curves to produce a graffiti-style gesture.

At 506, in response to the initial user activation event, a first path of a first portion of the direction-specific symbolic swipe gesture is recorded. At 508, a first selected number of possible symbolic gestures based on the recorded first path is calculated. In one embodiment, the selected number of possible symbolic gestures is calculated based on the recorded first path, gestures that align with the record first path, and/or gestures that are most used by the user.

At 510, in response to a pause in direction-specific symbolic swipe gesture, the calculated first selected number of possible symbolic gestures based on the recorded first path are displayed that reveal system commands that map to the symbolic gestures.

At 512, a second portion of the direction-specific symbolic swipe gesture is received. At 514, a second path of a second portion of the direction-specific symbolic swipe gesture is recorded. At 516, a second selected number of possible symbolic gestures based on recorded first and second paths is recorded. At 518, in response to a pause in the direction-specific symbolic swipe gesture, the calculated second selected number of possible symbolic gestures based on recorded first path are displayed that reveal system commands that map to symbolic gestures.

At 520, a third portion of the direction-specific symbolic swipe gesture is received. At 522, a third path of third portion of direction-specific symbolic swipe gesture is recorded. Example first, second, and third portions of the direction-specific symbolic swipe gesture are produced from a digit of a hand of a user, a stylus, and/or an action of a pointing device. In one example, the first, second, and third portions of the direction-specific symbolic swipe gesture are produced from a digit of a first hand (e.g., dominant hand) of the user, and the initial user activation event is produced from a digit of a second hand (e.g., non-dominant hand) of the user.

At 524, in response to the recorded first, second, and third paths of the direction-specific symbolic swipe gesture and a trigger, a first system command is accessed that maps to the first direction-specific gesture. Example triggers are produced in response to a digit being lifted from a touchscreen, a stylus being lifted from a touchscreen, and/or a second action of the pointing device. At 526, the accessed first system command is executed.

The computer implemented method 400 or method 500 employ the combination of the initial user activation event and the direction-specific symbolic swipe gesture that allows system commands to be easily accessed and executed. Traditional marking menus typically can call functions based on only single vectors. The combination of an initial activation gesture and a secondary function selection gesture (e.g., curved gestures or graffiti-style gestures) of the disclosed embodiments can permit a significant increase in the number of system commands available to be accessed and executed. Via repeated entering of direction-specific symbolic swipe gestures, muscle memory of a user for specific system commands can develop, and therefore further increase productivity speed.

Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the claims and the equivalents thereof.

## Claims

1. A computer readable storage medium storing computer-executable instructions for controlling a computing device to perform a method comprising:
performing a self-revealing symbolic gesture event comprising:
recording (402), in response to an initial user activation event, a first path of a first portion of a direction-specific symbolic swipe gesture, the initial user activation event being made with a touch with a digit of a first hand of a user to a touchscreen;
displaying (404), in response to a pause in the direction-specific symbolic swipe gesture, a selected number of possible symbolic gestures based on the recorded first path that reveal system commands that map to the symbolic gestures;
recording (406) a second path of a second portion of the direction-specific symbolic swipe gesture; and
accessing (408), in response to the recorded first and second paths of the direction-specific symbolic swipe gesture and a trigger, a first system command that maps to the first direction-specific gesture,
wherein releasing the digit of the first hand at any time after the initial user activation event cancels the self-revealing symbolic gesture event, and
wherein the first portion and the second portion of the direction-specific symbolic swipe gesture are produced from a digit of a second hand of the user.

2. A computing device implemented method comprising:
performing a self-revealing symbolic gesture event comprising:
recording (402), in response to an initial user activation event, a first path of a first portion of a direction-specific symbolic swipe gesture, the initial user activation event being made with a touch with a digit of a first hand of a user to a touchscreen;
displaying (404), in response to a pause in the direction-specific symbolic swipe gesture, a selected number of possible symbolic gestures based on the recorded first path that reveal system commands that map to the symbolic gestures;
recording (406) a second path of a second portion of the direction-specific symbolic swipe gesture; and
accessing (408), in response to the recorded first and second paths of the direction-specific symbolic swipe gesture and a trigger, a first system command that maps to the first direction-specific gesture,
wherein releasing the digit of the first hand at any time after the initial user activation event cancels the self-revealing symbolic gesture event, and
wherein the first portion and the second portion of the direction-specific symbolic swipe gesture are produced from a digit of a second hand of the user.

3. The computer readable storage medium of claim 1 or the method of claim 2, the method comprising:
executing (410) the accessed first system command.

4. The computer readable storage medium of claim 1 or the method of claim 2, wherein the direction-specific symbolic swipe gesture includes a curve.

5. The computer readable storage medium of claim 1 or the method of claim 2, the method comprising:
calculating the selected number of possible symbolic gestures based on the recorded first path and gestures that align with the record first path.

6. The computer readable storage medium of claim 1 or the method of claim 2, the method comprising:
calculating the selected number of possible symbolic gestures based on the recorded first path and gestures that are most used by a user.

7. The computer readable storage medium of claim 1 or the method of claim 2, the method comprising:
receiving the initial user activation event.

8. The computer readable storage medium of claim 1 or the method of claim 2, the method comprising:
recording a third path of a third portion of the direction-specific symbolic swipe gesture, wherein the third portion of the direction-specific symbolic swipe gesture is produced from the digit of the second hand of the user; and
accessing, in response to the recorded first, second, and third paths of the direction-specific symbolic swipe gesture and the trigger, the first system command that maps to the first direction-specific gesture.

9. The computer readable storage medium of claim 1 or the method of claim 2, the method comprising:
receiving the first and second portions of the direction-specific symbolic swipe gesture produced from the digit of the second hand of the user.

10. The computer readable storage medium of claim 9 or the method of claim 9 comprising:
producing the trigger in response to the digit of the second hand being lifted from the touchscreen.

11. The computer readable storage medium of claim 1 or the method of claim 2, the method comprising:
receiving the first and second portions of the direction-specific symbolic swipe gesture produced from the digit of the second hand of the user; and
producing the trigger in response to the digit of the second hand being lifted from the touchscreen.

## Patentansprüche

1. Computerlesbares Speichermedium, das computerausführbare Anweisungen zur Steuerung einer Rechnervorrichtung speichert, um ein Verfahren durchzuführen, umfassend:
Durchführen eines selbstenthüllenden symbolischen Handbewegungsvorgangs (gesture event), umfassend:
Aufzeichnen (402), als Antwort auf einen anfänglichen Benutzeraktivierungsvorgang, eines ersten Wegs eines ersten Teils einer richtungsspezifischen symbolischen Wischhandbewegung, wobei der anfängliche Benutzeraktivierungsvorgang mittels einer Berührung eines Touchscreens mit einem Finger einer ersten Hand eines Benutzers durchgeführt wird;
Anzeigen (404), als Antwort auf eine Unterbrechung in der richtungsspezifischen symbolischen Wischhandbewegung, einer ausgewählten Anzahl möglicher symbolischer Handbewegungen auf Grundlage des aufgezeichneten ersten Weges, die Systembefehle enthüllen, die den symbolischen Handbewegungen zugeordnet sind;
Aufzeichnen (406) eines zweiten Wegs eines zweiten Teils der richtungsspezifischen symbolischen Wischhandbewegung; und
Zugreifen (408), als Antwort auf die aufgezeichneten ersten und zweiten Wege der richtungsspezifischen symbolischen Wischhandbewegung und einen Auslöser, auf einen ersten Systembefehl, der der ersten richtungsspezifischen Handbewegung zugeordnet ist,
wobei das Lösen des Fingers der ersten Hand zu jeder Zeit nach dem anfänglichen Benutzeraktivierungsvorgang den selbstenthüllenden symbolischen Handbewegungsvorgang abbricht, und
wobei der erste Teil und der zweite Teil der richtungsspezifischen symbolischen Wischhandbewegung von einem Finger einer zweiten Hand des Benutzers erzeugt werden.

2. Rechnervorrichtungsimplementiertes Verfahren, umfassend:
Durchführen eines selbstenthüllenden symbolischen Handbewegungsvorgangs, umfassend:
Aufzeichnen (402), als Antwort auf einen anfänglichen Benutzeraktivierungsvorgang, eines ersten Wegs eines ersten Teils einer richtungsspezifischen symbolischen Wischhandbewegung, wobei der anfängliche Benutzeraktivierungsvorgang mit einer Berührung eines Touchscreens mit einem Finger einer ersten Hand eines Benutzers erfolgt;
Anzeigen (404), als Antwort auf eine Unterbrechung in der richtungsspezifischen symbolischen Wischhandbewegung, einer ausgewählten Anzahl möglicher symbolischer Handbewegungen auf Grundlage des aufgezeichneten ersten Weges, die Systembefehle enthüllen, die den symbolischen Handbewegungen zugeordnet sind;
Aufzeichnen (406) eines zweiten Pfades eines zweiten Teils der richtungsspezifischen symbolischen Wischhandbewegung; und
Zugreifen (408), als Antwort auf die aufgezeichneten ersten und zweiten Wege der richtungsspezifischen symbolischen Wischhandbewegung und einen Auslöser, auf einen ersten Systembefehl, der der ersten richtungsspezifischen Handbewegung zugeordnet ist,
wobei das Lösen des Fingers der ersten Hand zu jeder Zeit nach dem anfänglichen Benutzeraktivierungsvorgang den selbstenthüllenden symbolischen Handbewegungsvorgang abbricht, und
wobei der erste Teil und der zweite Teil der richtungsspezifischen symbolischen Wischhandbewegung von einem Finger einer zweiten Hand des Benutzers erzeugt werden.

3. Computerlesbares Speichermedium nach Anspruch 1 oder dem Verfahren nach Anspruch 2, wobei das Verfahren umfasst:
Ausführen (410) des ersten Systembefehls, auf den zugegriffen wird.

4. Computerlesbares Speichermedium nach Anspruch 1 oder dem Verfahren nach Anspruch 2, wobei die richtungsspezifische symbolische Wischhandbewegung eine Kurve einschließt.

5. Computerlesbares Speichermedium nach Anspruch 1 oder dem Verfahren nach Anspruch 2, wobei das Verfahren umfasst:
Berechnen der ausgewählten Anzahl möglicher symbolischer Handbewegungen auf Grundlage des aufgezeichneten ersten Weges und der Handbewegungen, die mit dem aufgezeichneten ersten Weg übereinstimmen.

6. Computerlesbares Speichermedium nach Anspruch 1 oder dem Verfahren nach Anspruch 2, wobei das Verfahren umfasst:
Berechnen der ausgewählten Anzahl möglicher symbolischen Handbewegungen auf Grundlage des aufgezeichneten ersten Weges und der von einem Benutzer am häufigsten ausgeführten Handbewegungen

7. Computerlesbares Speichermedium nach Anspruch 1 oder dem Verfahren nach Anspruch 2, wobei das Verfahren umfasst:
Empfangen des anfänglichen Benutzeraktivierungsvorgangs.

8. Computerlesbares Speichermedium nach Anspruch 1 oder dem Verfahren nach Anspruch 2, wobei das Verfahren umfasst:
Aufzeichnen eines dritten Wegs eines dritten Teils der richtungsspezifischen symbolischen Wischhandbewegung, wobei der dritte Teil der richtungsspezifischen symbolischen Wischhandbewegung von dem Finger der zweiten Hand des Benutzers erzeugt wird; und
Zugreifen, als Antwort auf die aufgezeichneten ersten, zweiten und dritten Wege der richtungsspezifischen symbolischen Wischhandbewegung und einen Auslöser, auf den ersten Systembefehl, der der ersten richtungsspezifischen Handbewegung zugeordnet ist,

9. Computerlesbares Speichermedium nach Anspruch 1 oder dem Verfahren nach Anspruch 2, wobei das Verfahren umfasst:
Empfangen der ersten und zweiten Teile der richtungsspezifischen symbolischen Wischhandbewegung, die von dem Finger der zweiten Hand des Benutzers erzeugt wird.

10. Computerlesbares Speichermedium nach Anspruch 9 oder dem Verfahren nach Anspruch 9, umfassend:
Erzeugen des Auslösers als Antwort darauf, dass der Finger der zweiten Hand, von dem Touchscreen weg, angehoben wird.

11. Computerlesbares Speichermedium nach Anspruch 1 oder dem Verfahren nach Anspruch 2, wobei das Verfahren umfasst:
Empfangen der ersten und zweiten Teile des richtungsspezifischen symbolischen Wischhandbewegung, die von dem Finger der zweiten Hand des Benutzers erzeugt wird; und
Erzeugen des Auslösers als Antwort darauf, dass der Finger der zweiten Hand, von dem Touchscreen weg, angehoben wird.

## Revendications

1. Support de stockage lisible par un ordinateur stockant des instructions pour le contrôle d'un dispositif informatique pour effectuer un procédé comprenant :
exécution d'un événement de geste symbolique auto-révélateur comprenant :
enregistrement (402), en réponse à un événement d'activation d'utilisateur initial, d'un premier trajet d'une première partie d'un geste de balayage symbolique spécifique d'une direction, l'événement d'activation d'utilisateur initial étant constitué d'un toucher avec un doigt d'une première main d'un utilisateur sur un écran tactile ;
affichage (404), en réponse à une pause dans le geste de balayage symbolique spécifique d'une direction, d'un nombre sélectionné de gestes symboliques possibles selon le premier trajet enregistré qui révèlent des commandes système qui correspondent aux gestes symboliques ;
enregistrement (406) d'un deuxième trajet d'une deuxième partie du geste de balayage symbolique spécifique d'une direction ; et
accès (408), en réponse aux premier et deuxième trajets enregistrés du geste de balayage symbolique spécifique d'une direction et un déclencheur, à une première commande système qui correspond au premier geste spécifique d'une direction,
dans lequel une libération du doigt de la première main à tout moment après l'événement d'activation d'utilisateur annule l'événement de geste symbolique auto-révélateur, et
dans lequel la première partie et la deuxième partie du geste de balayage symbolique spécifique d'une direction sont produites à partir d'un doigt d'une deuxième main de l'utilisateur.

2. Procédé mis en oeuvre sur un dispositif informatique comprenant :
exécution d'un événement de geste symbolique auto-révélateur comprenant :
enregistrement (402), en réponse à un événement d'activation d'utilisateur initial, d'un premier trajet d'une première partie d'un geste de balayage symbolique spécifique d'une direction, l'événement d'activation d'utilisateur initial étant constitué d'un toucher avec un doigt d'une première main d'un utilisateur sur un écran tactile ;
affichage (404), en réponse à une pause dans le geste de balayage symbolique spécifique d'une direction, d'un nombre sélectionné de gestes symboliques possibles selon le premier trajet enregistré qui révèlent des commandes système qui correspondent aux gestes symboliques ;
enregistrement (406) d'un deuxième trajet d'une deuxième partie du geste de balayage symbolique spécifique d'une direction ; et
accès (408), en réponse aux premier et deuxième trajets enregistrés du geste de balayage symbolique spécifique d'une direction et un déclencheur, à une première commande système qui correspond au premier geste spécifique d'une direction,
dans lequel une libération du doigt de la première main à tout moment après l'événement d'activation d'utilisateur annule l'événement de geste symbolique auto-révélateur, et
dans lequel la première partie et la deuxième partie du geste de balayage symbolique spécifique d'une direction sont produites à partir d'un doigt d'une deuxième main de l'utilisateur.

3. Le support de stockage lisible par un ordinateur de la revendication 1 ou le procédé de la revendication 2, le procédé comprenant :
exécution (410) de la première commande système accédée.

4. Le support de stockage lisible par un ordinateur de la revendication 1 ou le procédé de la revendication 2, dans lequel le geste de balayage symbolique spécifique d'une direction inclut une courbe.

5. Le support de stockage lisible par un ordinateur de la revendication 1 ou le procédé de la revendication 2, le procédé comprenant :
calcul du nombre sélectionné de gestes symboliques possibles selon le premier trajet enregistré et des gestes qui s'alignent sur le premier trajet enregistré.

6. Le support de stockage lisible par un ordinateur de la revendication 1 ou le procédé de la revendication 2, le procédé comprenant :
calcul du nombre sélectionné de gestes symboliques possibles selon le premier trajet enregistré et des gestes qui sont les plus utilisés par un utilisateur.

7. Le support de stockage lisible par un ordinateur de la revendication 1 ou le procédé de la revendication 2, le procédé comprenant :
réception de l'événement d'activation d'utilisateur initial.

8. Le support de stockage lisible par un ordinateur de la revendication 1 ou le procédé de la revendication 2, le procédé comprenant :
enregistrement d'un troisième trajet d'une troisième partie du geste de balayage symbolique spécifique d'une direction, dans lequel la troisième partie du geste de balayage symbolique spécifique d'une direction est produite à partir du doigt de la deuxième main de l'utilisateur ; et
accès, en réponse aux premier, deuxième et troisième trajets enregistrés du geste de balayage symbolique spécifique d'une direction et un déclencheur, à la première commande système qui correspond au premier geste spécifique d'une direction.

9. Le support de stockage lisible par un ordinateur de la revendication 1 ou le procédé de la revendication 2, le procédé comprenant :
réception des première et deuxième parties du geste de balayage symbolique spécifique d'une direction produites à partir du doigt d'une deuxième main de l'utilisateur.

10. Le support de stockage lisible par un ordinateur de la revendication 9 ou le procédé de la revendication 9, comprenant :
production du déclencheur en réponse au doigt de la deuxième main retirée de l'écran tactile.

11. Le support de stockage lisible par un ordinateur de la revendication 1 ou le procédé de la revendication 2, le procédé comprenant :
réception des première et deuxième parties du geste de balayage symbolique spécifique d'une direction produites à partir du doigt d'une deuxième main de l'utilisateur ; et
production du déclencheur en réponse au doigt de la deuxième main retirée de l'écran tactile.
